(19) Europäisches Patentamt
European Patent Office
Office européen des brevets

(11) EP 4 267 672 B1

(12) FASCICULE DE BREVET EUROPEEN

(45) Date de publication et mention de la délivrance du brevet:
**22.01.2025 Bulletin 2025/04**

(21) Numéro de dépôt: **21835807.5**

(22) Date de dépôt: **29.11.2021**

(51) Classification Internationale des Brevets (IPC):
***C08L 23/08*** *(2025.01)* ***B60C 1/00*** *(2006.01)*
***C08K 5/11*** *(2006.01)* ***C08K 3/04*** *(2006.01)*

(52) Classification Coopérative des Brevets (CPC):
(C-Sets disponibles)
**C08L 23/083; B60C 1/0016; C08F 210/02** (Cont.)

(86) Numéro de dépôt international:
**PCT/FR2021/052122**

(87) Numéro de publication internationale:
**WO 2022/136751 (30.06.2022 Gazette 2022/26)**

# (54) COMPOSITION DE CAOUTCHOUC COMPRENANT UN ÉLASTOMÈRE DIÉNIQUE FORTEMENT SATURÉ

KAUTSCHUKZUSAMMENSETZUNG MIT EINEM HOCHGESÄTTIGTEN DIENELASTOMER

RUBBER COMPOSITION COMPRISING A HIGHLY SATURATED DIENE ELASTOMER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2020 FR 2014018**

(43) Date de publication de la demande:
**01.11.2023 Bulletin 2023/44**

(73) Titulaire: **COMPAGNIE GENERALE DES ETABLISSEMENTS MICHELIN**
**63000 Clermont-Ferrand (FR)**

(72) Inventeurs:
- **ARAUJO DA SILVA, José-Carlos**
  **63040 CLERMONT-FERRAND Cedex 9 (FR)**
- **GORNARD, Benjamin**
  **63040 CLERMONT-FERRAND Cedex 9 (FR)**
- **LALLET, François**
  **63040 CLERMONT-FERRAND Cedex 9 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**WO-A1-2014/114607 WO-A1-2020/011003**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC): (Cont.)

C-Sets
**C08F 210/02, C08F 4/52;**
**C08L 23/083, C08L 91/06, C08K 3/04, C08K 5/11, C08K 3/06, C08K 3/22, C08K 5/09, C08K 5/31, C08K 5/40, C08K 5/47;**
C08F 210/02, C08F 236/06

## Description

Le domaine de la présente invention est celui des compositions de caoutchouc à base d'élastomère diénique fortement saturé destinées à être utilisées dans un pneumatique, notamment dans sa bande de roulement.

L'utilisation d'élastomère diénique fortement saturé est connue dans l'art antérieur. Par exemple, les copolymères d'éthylène et de 1,3-butadiène et leur application dans une bande de roulement d'un pneumatique est décrite dans le document WO 2014114607A1. On indique dans ce document que l'utilisation de ces copolymères a pour effet de conférer de bonnes propriétés de résistance à l'usure et de résistance au roulement au pneumatique.

En parallèle, certains documents tels que le document WO2020011003A1, mentionnent l'utilisation de plastifiant dialkylester de diacide aliphatique (diisooctyle sébacate) dans des compositions de polyéthylène, comme un plastifiant possible dans une liste, sans discuter d'aucun effet particulier lié à l'utilisation de ce plastifiant.

Dans le domaine discuté plus haut des pneumatiques comprenant un élastomère diénique fortement saturé en bande de roulement, il existe toujours un besoin de disposer de compositions de caoutchouc avec un équilibre amélioré entre les propriétés de la température de transition vitreuse du mélange, importante pour optimiser l'adhérence du pneumatique sur le sol, et la rigidité.

Il est connu de l'homme de l'art que l'adhérence du pneumatique est ajustée en fonction de la température d'usage grâce à la température de transition vitreuse du mélange. En particulier par temps froid, l'homme de l'art doit diminuer la transition vitreuse du mélange par rapport à la température de transition vitreuse du mélange utilisé par temps chaud. Afin de diminuer la transition vitreuse du mélange, l'homme de l'art peut ajouter à la composition une huile de basse température de transition vitreuse. Toutefois, l'utilisation d'une huile provoque la dilution des polymères et entraîne une diminution de la rigidité du mélange. L'abaissement de la rigidité du mélange pénalise le comportement du pneumatique et augmente l'usure de la bande de roulement. Le problème à résoudre pour l'homme de l'art est de pouvoir diminuer la transition vitreuse du mélange sans trop diminuer la rigidité de ce mélange.

La Demanderesse a trouvé une composition de caoutchouc qui permet de répondre à ce besoin dans le domaine d'application des élastomères diéniques fortement saturés pour les pneumatiques et en particulier pour la bande de roulement.

Ainsi, un premier objet de l'invention est une composition de caoutchouc à base d'au moins une matrice élastomère comprenant majoritairement un élastomère diénique fortement saturé, du noir de carbone, un dialkylester de diacide aliphatique ; l'élastomère diénique fortement saturé étant un copolymère d'éthylène et d'un 1,3-diène dans lequel les unités éthylène représentent au moins 50% en mole des unités monomères du copolymère.

Un autre objet de l'invention est un bandage pneumatique ou non-pneumatique qui comprend une composition de caoutchouc conforme à l'invention, de préférence dans sa bande de roulement.

### I- DÉFINITIONS

Par l'expression "composition à base de", il faut entendre une composition comportant le mélange et/ou le produit de réaction in situ des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par l'expression "partie en poids pour cent parties en poids d'élastomère" (ou pce), il faut entendre au sens de la présente invention, la partie, en masse pour cent parties en masse d'élastomère.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Dans la présente demande, on entend par « l'ensemble des unités monomères de l'élastomère » ou « la totalité des unités monomères de l'élastomère » tous les motifs de répétitions constitutifs de l'élastomère qui résultent de l'insertion des monomères dans la chaîne élastomère par polymérisation. Sauf indication contraire, les teneurs en une unité monomère ou motif de répétition dans l'élastomère diénique fortement saturé sont données en pourcentage molaire calculé sur la base de l'ensemble des unités monomères de l'élastomère.

Lorsqu'on fait référence à un composé "majoritaire", on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un élastomère majoritaire est l'élastomère représentant la plus grande masse par rapport à la masse totale des élastomères dans la composition. De la même manière, une charge dite majoritaire est celle représentant la plus grande masse parmi les charges de la

composition. A titre d'exemple, dans un système comprenant un seul élastomère, celui-ci est majoritaire au sens de la présente invention ; et dans un système comprenant deux élastomères, l'élastomère majoritaire représente plus de la moitié de la masse des élastomères. Au contraire, un composé "minoritaire" est un composé qui ne représente pas la fraction massique la plus grande parmi les composés du même type. De préférence par majoritaire, on entend présent à plus de 50%, de préférence plus de 60%, 70%, 80%, 90%, et plus préférentiellement le composé « majoritaire » représente 100%.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage. Sont concernés notamment les polymères, les plastifiants, les charges, etc.

Sauf indication différente, comme c'est le cas dans les exemples présentés plus bas, les valeurs de température de transition vitreuse « Tg » décrite dans la présente sont mesurées de manière connue par DSC (Differential Scanning Calorimetry) selon la norme ASTM D3418 (1999).

## II- DESCRIPTION DE L'INVENTION

### II-1 Matrice élastomère

Par « matrice élastomère », on entend l'ensemble des élastomères de la composition.

Selon l'invention, la matrice élastomère comprend majoritairement au moins élastomère diénique fortement saturé, à savoir un copolymère contenant des unités éthylène et des unités diéniques (ci-après dénommé « le copolymère »).

L'élastomère diénique fortement saturé, utile aux besoins de l'invention est un copolymère, de préférence statistique, qui comprend des unités éthylène résultant de la polymérisation d'éthylène. De manière connue, l'expression « unité éthylène » fait référence au motif -(CH2-CH2)- résultant de l'insertion de l'éthylène dans la chaîne élastomère. L'élastomère diénique fortement saturé est riche en unité éthylène, puisque les unités éthylène représentent au moins 50% en mole de l'ensemble des unités monomères de l'élastomère.

De préférence, l'élastomère diénique fortement saturé comprend au moins 65% molaire d'unité éthylène. Autrement dit, les unités éthylène représentent préférentiellement au moins 65% en mole de l'ensemble des unités monomères de l'élastomère diénique fortement saturé. De manière plus préférentielle, l'élastomère diénique fortement saturé comprend de 65% à 90% molaire d'unité éthylène, pourcentage molaire calculé sur la base de l'ensemble des unités monomères de l'élastomère diénique fortement saturé.

L'élastomère diénique fortement saturé étant un copolymère d'éthylène et d'un 1,3-diène comprend aussi des unités 1,3-diène résultant de la polymérisation d'un 1,3-diène. De manière connue, l'expression « unité 1,3-diène » fait référence aux unités résultant de l'insertion du 1,3-diène par une addition 1,4, une addition 1,2 ou une addition 3,4 dans le cas de l'isoprène. Les unités 1,3-diène sont celles par exemple d'un 1,3-diène ayant 4 à 12 atomes de carbone, tels que le 1,3-butadiène, l'isoprène, le 1,3-pentadiène, un aryl-1,3-butadiène. De préférence, le 1,3-diène est le 1,3-butadiène, auquel cas l'élastomère diénique fortement saturé est un copolymère d'éthylène et de 1,3-butadiène, de préférence statistique.

L'élastomère diénique fortement saturé utile aux besoins de l'invention, peut être obtenu selon différentes méthodes de synthèses connues de l'homme du métier, notamment en fonction de la microstructure visée de l'élastomère diénique fortement saturé. Généralement, il peut être préparé par copolymérisation au moins d'un 1,3-diène, de préférence le 1,3-butadiène, et d'éthylène et selon des méthodes de synthèse connues, en particulier en présence d'un système catalytique comprenant un complexe métallocène. On peut citer à ce titre les systèmes catalytiques à base de complexes métallocènes, lesquels systèmes catalytiques sont décrits dans les documents EP 1 092 731, WO 2004035639, WO 2007054223 et WO 2007054224 au nom de la Demanderesse. L'élastomère diénique fortement saturé, y compris lorsqu'il est statistique, peut être préparé aussi par un procédé utilisant un système catalytique de type préformé comme ceux décrits dans les documents WO 2017093654 A1, WO 2018020122 A1 et WO 2018020123 A1.

L'élastomère diénique fortement saturé dans la composition de l'invention contient de préférence des unités de formule (I) [Chem 1] ou des unités de formule (II) [Chem 2].

[Chem 1]

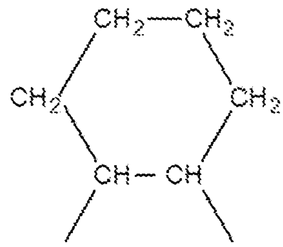

(I)

[Chem 2]

$-CH_2-CH(CH=CH_2)-$ (II)

La présence de motif cyclique saturé à 6 membres, 1,2-cyclohexanediyle, de formule (I) dans le copolymère peut résulter d'une série d'insertions très particulières de l'éthylène et du 1,3-butadiène dans la chaîne polymère au cours de sa croissance. Lorsque l'élastomère diénique fortement saturé comprend des unités de formule (I) ou des unités de formule (II), les pourcentages molaires des unités de formule (I) et des unités de formule (II) dans l'élastomère diénique fortement saturé, respectivement o et p, satisfont de préférence à l'équation suivante (eq. 1) [Math 1], de manière plus préférentielle à l'équation (eq. 2) [Math 2], et plus préférentiellement à l'équation (eq. 3) [Math 3], o et p étant calculés sur la base de l'ensemble des unités monomères de l'élastomère diénique fortement saturé.
[Math 1]

$$0 < o+p \leq 35 \qquad \text{(eq. 1)}$$

[Math 2]

$$0 < o+p \leq 25 \qquad \text{(eq. 2)}$$

[Math 3]

$$0 < o+p < 20 \qquad \text{(eq. 3)}$$

L'élastomère diénique fortement saturé utile aux besoins de l'invention peut être constitué d'un mélange d'élastomères diéniques fortement saturés qui se différencient les uns des autres par leurs microstructures ou par leurs macrostructures.

Selon l'invention, le taux de l'élastomère diénique fortement saturé dans la composition de caoutchouc est d'au moins 50 parties en poids pour cent parties d'élastomère de la composition de caoutchouc (pce). De préférence, le taux de l'élastomère diénique fortement saturé dans la composition de caoutchouc varie dans un domaine allant de 80 à 100 pce. De manière plus préférentielle, il varie dans un domaine allant de 90 à 100 pce.

A titre complémentaire, la matrice élastomère de la composition de l'invention peut comprend tout type d'élastomère, à titre minoritaire. Notons en particulier les élastomères diéniques connus de l'homme du métier pour leur utilisation dans le domaine des pneumatiques.

II-2 Plastifiant spécifique

Selon l'invention, la composition de caoutchouc est à base d'au moins un plastifiant dialkylester de diacide aliphatique.

De préférence pour les besoins de l'invention, le plastifiant dialkylester de diacide aliphatique est présent dans la composition à un taux compris dans un domaine allant de 5 à 50 pce, de préférence de 7 à 40 pce et plus préférentiellement de 8 à 30 pce. De façon très préférentielle, le taux de plastifiant dialkylester de diacide aliphatique est compris dans un domaine allant de 8 à 15 pce.

De préférence, le plastifiant dialkylester de diacide aliphatique est un composé de formule ROOC-(CH2)n-COOR dans lequel R est un alkyl linéaire ou branché et n représente un nombre entier de 4 à 20.
De préférence, le radical R est un alkyl comprenant de 4 à 20 atomes de carbone, de préférence de 6 à 12 atomes de carbone et plus préférentiellement de 6 à 10 atomes de carbone.
De préférence, le radical R est un alkyl ramifié, et de façon très préférentielle, R est un radical isooctyle.
De préférence pour les besoins de l'invention, n représente un entier de 4 à 12, et de préférence un entier de 6 à 10. De façon très préférée, n est égal à 8.
De façon très préférentielle, le plastifiant dialkylester de diacide aliphatique est le diisooctyle sébacate [Chem 3] ci-dessous.

[Chem 3]

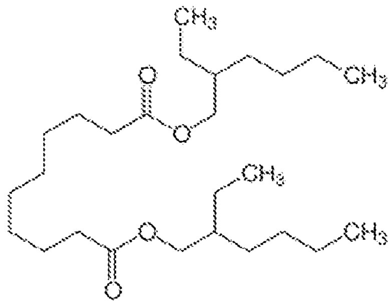

Le diisooctyle sébacate, de numéro CAS 122-62-3, présente une température de transition vitreuse de -104°C et il est par exemple commercialisé sous la dénomination « Plasthall DOS » par la société Hallstar.
En outre, la composition selon l'invention ne comprend avantageusement pas de plastifiant autre que le plastifiant spécifique ci-dessus, ou en contient moins de 15 pce, de préférence moins de 10 pce, de préférence moins de 5 pce.

II-3 Charge renforçante

La composition de caoutchouc conforme à l'invention a pour autre caractéristique essentielle de comprendre une charge renforçante comprenant du noir de carbone.
Une charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.
Comme noirs de carbone conviennent tous les noirs de carbone, notamment les noirs conventionnellement utilisés dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Lorsque la composition de caoutchouc conforme à l'invention est utilisée dans une bande de roulement, le noir de carbone est préférentiellement un noir de carbone des séries 100 ou 200.
Le taux de noir de carbone peut varier dans une large mesure et est ajusté par l'homme du métier selon l'application envisagée de la composition de caoutchouc, en particulier dans le domaine du pneumatique. Pour une application de la composition de caoutchouc dans une bande de roulement, en particulier pour véhicules destinés à porter de lourdes de charges, le taux de noir de carbone dans la composition de caoutchouc est compris préférentiellement entre 15 et 65 pce. Pour une telle application dans le domaine des véhicules poids lourds, la composition de caoutchouc peut présenter un niveau de renforcement insuffisant au-dessous de 15 pce et peut présenter une hystérèse excessive au-dessus de 65 pce. De préférence, le taux de noir de carbone dans la composition de caoutchouc est compris dans un domaine allant de 20 à 45 pce.

II-4 Système de réticulation

Le système de réticulation peut être tout type de système connu de l'homme de l'art dans le domaine des compositions de caoutchouc pour pneumatique. Il peut notamment être à base de soufre, et/ou de peroxyde et/ou de bismaléimides.
De manière préférentielle, le système de réticulation est à base de soufre, on parle alors d'un système de vulcanisation. Le soufre peut être apporté sous toute forme, notamment sous forme de soufre moléculaire, ou d'un agent

donneur de soufre. Au moins un accélérateur de vulcanisation est également préférentiellement présent, et, de manière optionnelle, préférentielle également, on peut utiliser divers activateurs de vulcanisation connus tels qu'oxyde de zinc, acide stéarique ou composé équivalent tels que les sels d'acide stéarique et sels de métaux de transition, dérivés guanidiques (en particulier diphénylguanidine), ou encore des retardateurs de vulcanisation connus.

Le soufre est utilisé à un taux préférentiel compris entre 0,2 pce et 10 pce, plus préférentiellement entre 0,3 et 5 pce. L'accélérateur ou le mélange d'accélérateurs de vulcanisation est utilisé à un taux préférentiel compris entre 0,5 et 10 pce, plus préférentiellement compris entre 0,5 et 5 pce.

On peut utiliser comme accélérateur tout composé susceptible d'agir comme accélérateur de vulcanisation des élastomères diéniques en présence de soufre, notamment des accélérateurs du type thiazoles ainsi que leurs dérivés, des accélérateurs de types sulfénamides, thiurames, dithiocarbamates, dithiophosphates, thiourées et xanthates. A titre d'exemples de tels accélérateurs, on peut citer notamment les composés suivants : disulfure de 2-mercaptobenzothiazyle (en abrégé "MBTS"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), disulfure de tetrabenzylthiurame ("TBZTD"), dibenzyldithiocarbamate de zinc ("ZBEC") et les mélanges de ces composés.

II-5 Additifs possibles

Les compositions de caoutchouc selon l'invention peuvent comporter optionnellement également tout ou partie des additifs usuels habituellement utilisés dans les compositions d'élastomères pour pneumatique, comme par exemple des plastifiants (tels que des huiles plastifiantes et/ou des résines plastifiantes), des pigments, des agents de protection tels que cires anti-ozone, anti-ozonants chimiques, anti-oxydants, des agents anti-fatigue, des résines renforçantes (telles que décrites par exemple dans la demande WO 02/10269).

Toutefois, de manière particulièrement avantageuse, la composition selon l'invention ne comprend pas d'autre plastifiant que ceux précités ou en comprend moins de 20 pce, de préférence moins de 10 pce, de préférence moins de 5 pce.

Avantageusement, la composition selon l'invention ne comprend pas de résine plastifiante hydrocarbonée.

II-6 Préparation des compositions de caoutchouc

Les compositions conformes à l'invention peuvent être fabriquées dans des mélangeurs appropriés, en utilisant deux phases de préparation successives bien connues de l'homme du métier :

- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, la charge renforçante, les éventuels autres additifs divers, à l'exception du système de réticulation. L'incorporation de la charge éventuelle à l'élastomère peut être réalisée en une ou plusieurs fois en malaxant thermomécaniquement. Dans le cas où la charge est déjà incorporée en totalité ou en partie à l'élastomère sous la forme d'un mélange-maître (« masterbatch » en anglais) comme cela est décrit par exemple dans les demandes WO 97/36724 ou WO 99/16600, c'est le mélange-maître qui est directement malaxé et le cas échéant on incorpore les autres élastomères ou charges présents dans la composition qui ne sont pas sous la forme de mélange-maître, ainsi que les éventuels autres additifs divers autres que le système de réticulation. La phase non-productive peut être réalisée à haute température, jusqu'à une température maximale comprise entre 110°C et 200°C, de préférence entre 130°C et 185°C, pendant une durée généralement comprise entre 2 et 10 minutes.
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C.On incorpore alors le système de réticulation, et le tout est alors mélangé pendant quelques minutes, par exemple entre 5 et 15 min.

De telles phases ont été décrites par exemple dans les demandes EP-A-0501227, EP-A-0735088, EP-A-0810258, WO00/05300 ou WO00/05301.

La composition finale ainsi obtenue est ensuite calandrée par exemple sous la forme d'une feuille ou d'une plaque, notamment pour une caractérisation au laboratoire, ou encore extrudée (ou co-extrudée avec une autre composition de caoutchouc) sous la forme d'un semi-fini (ou profilé) de caoutchouc utilisable par exemple comme bande de roulement de pneumatique. Ces produits peuvent ensuite être utilisés pour la fabrication de pneumatiques, selon les techniques connues de l'homme du métier.

La composition peut être soit à l'état cru (avant réticulation ou vulcanisation), soit à l'état cuit (après réticulation ou

vulcanisation), peut être un produit semi-fini qui peut être utilisé dans un pneumatique.

La réticulation (ou cuisson), le cas échéant la vulcanisation, est conduite de manière connue à une température généralement comprise entre 130°C et 200°C, pendant un temps suffisant qui peut varier par exemple entre 5 et 90 min en fonction notamment de la température de cuisson, du système de réticulation adopté et de la cinétique de réticulation de la composition considérée.

II-7 Pneumatique

La présente invention a également pour objet un pneumatique comprenant une composition de caoutchouc selon l'invention.

De préférence, la composition selon l'invention est présente au moins dans la bande de roulement du pneumatique selon l'invention.

Le pneumatique selon l'invention peut être destiné à équiper des véhicules à moteur de type tourisme, SUV ("Sport Utility Vehicles"), ou deux roues (notamment motos), ou avions, ou encore des véhicules industriels choisis parmi camionnettes, << Poids-lourd » - c'est-à-dire métro, bus, engins de transport routier (camions, tracteurs, remorques), véhicules hors-la-route tels qu'engins agricoles ou de génie civil -, et autres.

Les caractéristiques précitées de la présente invention, ainsi que d'autres, seront mieux comprises à la lecture de la description suivante de plusieurs exemples de réalisation de l'invention, donnés à titre illustratif et non limitatif.

## III. EXEMPLES DE REALISATION DE L'INVENTION

III.1 Tests et mesures :

III.1-1 Détermination de la microstructure des élastomères :

La microstructure des élastomères est déterminée par analyse RMN 1H, suppléée par l'analyse RMN 13C lorsque la résolution des spectres RMN du 1H ne permet pas l'attribution et la quantification de toutes les espèces. Les mesures sont réalisées à l'aide d'un spectromètre RMN BRUKER 500MHz à des fréquences de 500.43 MHz pour l'observation du proton et 125.83MHz pour l'observation du carbone.

Pour les élastomères non solubles mais ayant la capacité de gonfler dans un solvant, est utilisée une sonde HRMAS 4mm z-grad permettant d'observer le proton et le carbone en mode découplé du proton. Les spectres sont acquis à des vitesses de rotation de 4000Hz à 5000Hz.

Pour les mesures sur des élastomères solubles, est utilisée une sonde RMN liquide permettant d'observer le proton et le carbone en mode découplé du proton.

La préparation des échantillons non solubles est faite dans des rotors remplis avec le matériau analysé et un solvant deutéré permettant le gonflement, en général du chloroforme deutéré (CDCl3). Le solvant utilisé doit toujours être deutéré et sa nature chimique peut être adaptée par l'homme du métier. Les quantités de matériau utilisées sont ajustées de façon à obtenir des spectres avec une sensibilité et une résolution suffisante.

Les échantillons solubles sont mis en solution dans un solvant deutéré (environ 25mg d'élastomère dans 1mL), en général du chloroforme deutéré (CDCl3). Le solvant ou coupage de solvant utilisé doit toujours être deutéré et sa nature chimique peut être adaptée par l'homme du métier.

Dans les deux cas (échantillon soluble ou échantillon gonflé):

Pour la RMN du proton est utilisée une séquence simple impulsion de 30°. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.

Pour la RMN du carbone est utilisée une séquence simple impulsion 30° avec un découplage du proton uniquement pendant l'acquisition pour éviter les effets « Overhauser Nucléaire » (NOE) et rester quantitatif. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.

Les mesures de RMN sont réalisées à 25°C.

III.1-2 Mesure des propriétés dynamiques :

Propriétés dynamiques

Les propriétés dynamiques sont mesurées sur un viscoanalyseur (Metravib V A4000), selon la norme ASTM

D5992-96. On enregistre la réponse d'un échantillon de composition vulcanisée (éprouvette cylindrique de 4 mm d'épaisseur et de 400 mm2 de section), soumis à une sollicitation sinusoïdale en cisaillement simple alterné, à la fréquence de 10Hz selon la norme ASTM D 1349-99.

Les résultats qui suivent sont issus de mesures mettant en oeuvre des balayages en température sous une contrainte donnée et des balayages en déformation et ce, à une fréquence de sollicitation de 10Hz.

Rigidité : la rigidité est déterminée à une déformation de 50% retour lors d'un balayage en déformation à 60°C de 0,1% à 100% de déformation crête-crête.

Température de transition vitreuse : la transition vitreuse est déterminée comme étant la température à laquelle le mélange présente une valeur de G" maximum lors d'essais de mesures en cisaillement à contrainte imposée de 0,7MPa.

III.2 Préparation des compositions de caoutchouc :

Les compositions de caoutchouc dont le détail de la formulation figure dans le tableau 1, ont été préparées de la manière suivante :
On introduit dans un mélangeur interne (taux de remplissage final : environ 70% en volume), dont la température initiale de cuve est d'environ 90°C, successivement l'élastomère, la charge renforçante ainsi que les divers autres ingrédients à l'exception du soufre et des accélérateurs de vulcanisation, les huiles sont introduites à 115°C. On conduit alors un travail thermomécanique (phase non-productive) en une étape, qui dure au total environ 3 à 4 min, jusqu'à atteindre une température maximale de « tombée » de 160°C. On récupère le mélange ainsi obtenu, on le refroidit puis on incorpore le soufre et les accélérateurs de vulcanisation sur un mélangeur (homo-finisseur) à 30 °C, en mélangeant le tout (phase productive) pendant un temps approprié (par exemple une dizaine de minutes).

Les compositions ainsi obtenues sont ensuite calandrées soit sous la forme de plaques (épaisseur 2 à 3mm) ou de feuilles fines de caoutchouc pour la mesure de leur propriétés physiques ou mécaniques, soit extrudées sous la forme d'une bande de roulement pour pneumatique.

L'élastomère (EBR) est préparé selon le mode opératoire suivant :
30 mg de métallocène [{Me2SiFlu2Nd(μ-BH4)2Li(THF)}2, le symbole Flu représentant le groupe fluorényle de formule C13H8] sont introduits dans une première bouteille Steinie en boite à gant. Le co-catalyseur, le butyloctylmagnésium mis au préalable en solution dans 300 ml de méthylcyclohexane dans une seconde bouteille Steinie, est introduit dans la première bouteille Steinie contenant le métallocène dans les proportions suivantes 0.00007 mol/L de métallocène, 0.0004 mol/L de co-catalyseur. Après 10 minutes de contact à température ambiante est obtenue une solution catalytique. La solution catalytique est ensuite introduite dans le réacteur de polymérisation. La température dans le réacteur est alors augmentée à 80°C. Lorsque cette température est atteinte, la réaction démarre par injection d'un mélange gazeux d'éthylène et de 1,3-butadiène (80/20 % molaire) dans le réacteur. La réaction de polymérisation se déroule à une pression de 8 bars. Les proportions de métallocène et de co-catalyseur sont respectivement de 0.00007 mol/L et 0.0004 mol/L. La réaction de polymérisation est stoppée par refroidissement, dégazage du réacteur et ajout d'éthanol. Un anti-oxydant est ajouté à la solution de polymère. Le copolymère est récupéré par séchage en étuve sous vide. Dans un réacteur contenant à 80°C du méthylcyclohexane, de l'éthylène et du butadiène dans les proportions (80/20%molaire Ethylène / butadiène), on ajoute du butyloctylmagnésium (BOMAG) pour neutraliser les impuretés du réacteur, puis le système catalytique. A ce moment, la température de réaction est régulée à 80°C et la réaction de polymérisation démarre. La réaction de polymérisation se déroule à une pression constante de 8 bars. Le réacteur est alimenté tout au long de la polymérisation en éthylène et en butadiène dans les proportions 80/20%molaire (Ethylène/Butadiene). La réaction de polymérisation est stoppée par refroidissement, dégazage du réacteur et ajout d'éthanol. Un anti-oxydant est ajouté à la solution de polymère. Le copolymère est récupéré par séchage en étuve sous vide jusqu'à masse constante.

Le système catalytique est un système catalytique préformé. Il est préparé dans le méthylcyclohexane à partir d'un métallocène, le [Me2Si(Flu)2Nd(μ-BH4)2Li(THF)], d'un co-catalyseur, le butyloctylmagnésium (BOMAG), et d'un monomère de préformation, le 1,3-butadiène, dans les teneurs suivant : métallocène : 0.00007 mol/L, co-catalyseur : 0.00036 mol/L. Il est préparé selon une méthode de préparation conforme au paragraphe II.1 de la demande de brevet WO 2017093654 A1.

La composition de caoutchouc C3 est conforme à l'invention. Les compositions de caoutchouc C1 et C2 ne sont pas conformes à l'invention, puisqu'elles ne comprennent pas le plastifiant spécifique nécessaire à l'invention.

[Table 1]

| Composants | C1 | C2 | C3 |
|---|---|---|---|
| EBR (1) | 100 | 100 | 100 |
| Noir de carbone (2) | 42 | 42 | 42 |
| Huile 1 (3) | - | 11 | - |

(suite)

| Composants | C1 | C2 | C3 |
|---|---|---|---|
| Huile 2 (4) | - | - | 11 |
| Cire (5) | 1 | 1 | 1 |
| Antioxydant (6) | 2 | 2 | 2 |
| Acide Stéarique | 1,5 | 1,5 | 1,5 |
| ZnO | 2,5 | 2,5 | 2,5 |
| Diphénylguanidine | 0,5 | 0,5 | 0,5 |
| Accélérateurs (7) | 0,8 | 0,8 | 0,8 |
| Soufre | 0,4 | 0,4 | 0,4 |

(1) EBR mooney 85, taux d'éthylene : 77%,
(2) Noir de carbone ASTM N234 de la société Cabot,
(3) Huile Paraffinique « Extensiol 51 » de la société Repsol,
(4) Huile « Plasthall DOS » de la société Hallstar,
(5) Cire Ozone C32 ST,
(6) Santoflex 6PPD de la société Flexsys,
(7) Accélérateurs : cyclohexyl-benzothiazyle sulfénamide CBS et tétrabenzylthiurame disulfure TBzTD de la société Akrochem.

III.3 Résultats :

Les résultats figurent dans le tableau 2.

[Table 2]

| Mesures MDC | C1 | C2 | C3 |
|---|---|---|---|
| Rigidité à 60°C (G*50% retour) | 1,25 | 0,92 | 1,24 |
| Transition vitreuse (T G" max) | -39,45 | -43,47 | -46,93 |

Les résultats montrent que la composition conforme à l'invention permet simultanément de baisser la transition vitreuse du mélange, tout en maintenant des niveaux de rigidités élevés, adaptés à une utilisation en bande de roulement de pneumatique. L'abaissement de la température de transition vitreuse du mélange permet une utilisation de cette formulation à des températures plus basses et la moindre diminution de la rigidité permet de conserver un bon comportement du pneumatique ainsi qu'une usure acceptable de la composition en bande de roulement.

## Revendications

1. Composition de caoutchouc à base d'au moins une matrice élastomère comprenant majoritairement un élastomère diénique fortement saturé, du noir de carbone, un plastifiant dialkylester de diacide aliphatique et un système de réticulation ; l'élastomère diénique fortement saturé étant un copolymère d'éthylène et d'un 1,3-diène dans lequel les unités éthylène représentent au moins 50% en mole des unités monomères du copolymère.

2. Composition de caoutchouc selon la revendication 1, dans laquelle les unités éthylène représentent entre 50% et 95% en mole des unités monomères du copolymère.

3. Composition de caoutchouc selon l'une quelconque des revendications précédentes, dans laquelle les unités éthylène représentent au moins 65% en mole des unités monomères du copolymère, de préférence de 65% à 90% en mole des unités monomères du copolymère.

4. Composition de caoutchouc selon l'une quelconque des revendications précédentes, dans laquelle le 1,3-diène est le 1,3-butadiène.

5. Composition de caoutchouc selon l'une quelconque des revendications précédentes, dans laquelle le copolymère est statistique.

6. Composition de caoutchouc selon l'une quelconque des revendications précédentes, dans laquelle le taux de l'élastomère diénique fortement saturé dans la composition de caoutchouc varie dans un domaine allant de 80 à 100 pce, de préférence de 90 à 100 pce.

7. Composition de caoutchouc selon l'une quelconque des revendications précédentes, dans laquelle le taux de plastifiant dialkylester de diacide aliphatique est compris dans un domaine allant de 5 à 50 pce, de préférence de 7 à 40 pce et plus préférentiellement de 8 à 30 pce.

8. Composition de caoutchouc selon l'une quelconque des revendications précédentes, dans laquelle plastifiant dialkylester de diacide aliphatique est un composé de formule ROOC-(CH2)n-COOR dans lequel R est un alkyl linéaire ou branché et n représente un nombre entier de 4 à 20.

9. Composition de caoutchouc selon la revendication précédente, dans laquelle le radical R est un alkyl comprenant de 4 à 20 atomes de carbone, de préférence de 6 à 12 atomes de carbone et plus préférentiellement de 6 à 10 atomes de carbone.

10. Composition de caoutchouc selon l'une quelconque des revendications 8 ou 9, dans laquelle le radical R est un alkyl ramifié, et plus préférentiellement R est un radical isooctyle.

11. Composition de caoutchouc selon l'une quelconque des revendications 8 à 10, dans laquelle n représente un entier de 4 à 12, de préférence un entier de 6 à 10, et plus préférentiellement n est égal à 8.

12. Composition de caoutchouc selon l'une quelconque des revendications précédentes, dans laquelle le plastifiant dialkylester de diacide aliphatique est le diisooctyle sébacate.

13. Composition de caoutchouc selon l'une quelconque des revendications précédentes, dans laquelle le taux de noir de carbone est compris entre 15 et 65 pce, de préférence compris dans un domaine allant de 20 à 45 pce.

14. Bandage pneumatique ou non-pneumatique qui comprend une composition de caoutchouc définie à l'une quelconque des revendications 1 à 13, de préférence dans sa bande de roulement.

**Patentansprüche**

1. Kautschukzusammensetzung auf Basis von mindestens einer Elastomermatrix, die hauptsächlich ein hochgesättigtes Dienelastomer umfasst, Ruß, einem aliphatischen Disäuredialkylester-Weichmacher und einem Vernetzungssystem; wobei es sich bei dem hochgesättigten Dienelastomer um ein Copolymer von Ethylen und einem 1,3-Dien handelt, in dem die Ethyleneinheiten mindestens 50 Mol-% der Monomereinheiten des Copolymers ausmachen.

2. Kautschukzusammensetzung nach Anspruch 1, wobei die Ethyleneinheiten zwischen 50 und 95 Mol-% der Monomereinheiten des Copolymers ausmachen.

3. Kautschukzusammensetzung nach einem der vorhergehenden Ansprüche, wobei die Ethyleneinheiten mindestens 65 Mol-% der Monomereinheiten des Copolymers und vorzugsweise 65 bis 90 Mol-% der Monomereinheiten des Copolymers ausmachen.

4. Kautschukzusammensetzung nach einem der vorhergehenden Ansprüche, wobei es sich bei dem 1,3-Dien um 1,3-Butadien handelt.

5. Kautschukzusammensetzung nach einem der vorhergehenden Ansprüche, wobei das Copolymer statistisch ist.

6. Kautschukzusammensetzung nach einem der vorhergehenden Ansprüche, wobei der Gehalt an hochgesättigtem Dienelastomer in der Kautschukzusammensetzung in einem Bereich von 80 bis 100 phe und vorzugsweise von 90 bis 100 phe variiert.

7. Kautschukzusammensetzung nach einem der vorhergehenden Ansprüche, wobei der Gehalt an aliphatischem Disäuredialkylester-Weichmacher in einem Bereich von 5 bis 50 phe, vorzugsweise von 7 bis 40 phe und weiter bevorzugt von 8 bis 30 phe liegt.

8. Kautschukzusammensetzung nach einem der vorhergehenden Ansprüche, wobei es sich bei dem aliphatischen Disäuredialkylester-Weichmacher um eine Verbindung der Formel ROOC-(CH2)n-COOR handelt, in der R ein lineares oder verzweigtes Alkyl ist und n für eine ganze Zahl von 4 bis 20 steht.

9. Kautschukzusammensetzung nach dem vorhergehenden Anspruch, wobei der Rest R ein Alkyl mit 4 bis 20 Kohlenstoffatomen, vorzugsweise 6 bis 12 Kohlenstoffatomen und weiter bevorzugt 6 bis 10 Kohlenstoffatomen ist.

10. Kautschukzusammensetzung nach einem der Ansprüche 8 oder 9, wobei der Rest R ein verzweigtes Alkyl ist und weiter bevorzugt R ein Isooctylrest ist.

11. Kautschukzusammensetzung nach einem der Ansprüche 8 bis 10, wobei n für eine ganze Zahl von 4 bis 12 und vorzugsweise von 6 bis 10 steht und weiter bevorzugt n gleich 8 ist.

12. Kautschukzusammensetzung nach einem der vorhergehenden Ansprüche, wobei es sich bei dem aliphatischen Disäuredialkylester-Weichmacher um Diisooctylsebacat handelt.

13. Kautschukzusammensetzung nach einem der vorhergehenden Ansprüche, wobei der Gehalt an Ruß zwischen 15 und 65 phe und vorzugsweise in einem Bereich von 20 bis 45 phe liegt.

14. Luftreifen oder Vollreifen, der eine Kautschukzusammensetzung gemäß einem der Ansprüche 1 bis 13 umfasst, vorzugsweise in seiner Lauffläche.

## Claims

1. Rubber composition based on at least one elastomer matrix predominantly comprising a highly saturated diene elastomer, carbon black, an aliphatic diacid dialkyl ester plasticizer and a crosslinking system; the highly saturated diene elastomer being a copolymer of ethylene and a 1,3-diene in which the ethylene units represent at least 50 mol% of the monomer units of the copolymer.

2. Rubber composition according to Claim 1, in which the ethylene units represent between 50 mol% and 95 mol% of the monomer units of the copolymer.

3. Rubber composition according to either of the preceding claims, in which the ethylene units represent at least 65 mol% of the monomer units of the copolymer, preferably from 65 mol% to 90 mol% of the monomer units of the copolymer.

4. Rubber composition according to any one of the preceding claims, in which the 1,3-diene is 1,3-butadiene.

5. Rubber composition according to any one of the preceding claims, in which the copolymer is a random copolymer.

6. Rubber composition according to any one of the preceding Claims, in which the content of highly saturated diene elastomer in the rubber composition varies within a range from 80 to 100 phr, preferably from 90 to 100 phr.

7. Rubber composition according to any one of the preceding claims, in which the content of aliphatic diacid dialkyl ester plasticizer is within a range from 5 to 50 phr, preferably from 7 to 40 phr and more preferentially from 8 to 30 phr.

8. Rubber composition according to any one of the preceding claims, in which the aliphatic diacid dialkyl ester plasticizer is a compound of formula ROOC-(CH2)n-COOR in which R is a linear or branched alkyl and n represents an integer from 4 to 20.

9. Rubber composition according to the preceding claim, in which the radical R is an alkyl comprising from 4 to 20 carbon atoms, preferably from 6 to 12 carbon atoms and more preferentially from 6 to 10 carbon atoms.

10. Rubber composition according to either of Claims 8 and 9, in which the radical R is a branched alkyl, and more

preferentially R is an isooctyl radical.

**11.** Rubber composition according to any one of Claims 8 to 10, in which n represents an integer from 4 to 12, preferably an integer from 6 to 10, and more preferentially n is equal to 8.

**12.** Rubber composition according to any one of the preceding claims, in which the aliphatic diacid dialkyl ester plasticizer is diisooctyl sebacate.

**13.** Rubber composition according to any one of the preceding claims, in which the carbon black content is between 15 and 65 phr, preferably in the range from 20 to 45 phr.

**14.** Pneumatic or non-pneumatic tyre casing which comprises a rubber composition defined in any one of Claims 1 to 13, preferably in its tread.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2014114607 A1
- WO 2020011003 A1
- EP 1092731 A
- WO 2004035639 A
- WO 2007054223 A
- WO 2007054224 A
- WO 2017093654 A1
- WO 2018020122 A1
- WO 2018020123 A1
- WO 0210269 A
- WO 9736724 A
- WO 9916600 A
- EP 0501227 A
- EP 0735088 A
- EP 0810258 A
- WO 0005300 A
- WO 0005301 A

### Littérature non-brevet citée dans la description

- *CHEMICAL ABSTRACTS*, 122-62-3